# EUROPEAN PATENT SPECIFICATION

(11) **EP 0 654 632 B1**
(45) Date of publication and mention of the grant of the patent: **01.07.1998**
(21) Application number: 94308678.5
(22) Date of filing: 24.11.1994
(51) Int. Cl.: F16L 59/16, F16L 59/20, F16L 58/18

(54) **A method of filling a gap in a pipe coating**
Verfahren zum Ausfüllen eines Spaltes in einer Rohrbeschichtung
Procédé pour boucher un trou dans un revêtement pour tuyaux

(30) Priority: 24.11.1993 GB 9324147
(43) Date of publication of application: 24.05.1995
(73) Proprietor: BRITISH PIPE COATERS LIMITED, London EC4V 6JA (GB)
(72) Inventor: Oram, Robert Kenneth, Cults, Aberdeen (GB)
(74) Representative: Ede, Eric

(56) References cited:
- EP-A- 0 164 323
- EP-A- 0 220 122
- EP-A- 0 222 643
- EP-A- 0 348 761
- DE-A- 2 716 316
- FR-A- 2 710 723
- US-A- 3 744 823

## Description

This invention relates to a method of filling a gap in a pipe coating and a pipe obtained thereby.

Many subsea flowlines are coated to insulate the pipe thermally and/or to provide anticorrosion properties. The coatings typically comprise solid, foam or microsphere-filled materials.

The coated pipe, typically of steel, is provided in sections with bare terminal portions of the steel pipe and the coating gaps are about 50 to 400mm long uncoated. These bare terminal portions known in the art as "cut backs" allow the pipes to be joined by welding without thermal degradation of the coating.

The product of this step is a pipe string with 100-800 mm uncoated cut backs at intervals. In order to maintain the anticorrosion and/or insulation properties of the string the coating gaps at the cutbacks should be filled.

EP 164 323 describes a method of filling the cut backs of a pipe provided with an insulating coating. A tubular sleeve of polyester is provided over the field joint with a longitudinal slot left open. All but the ends of the slot are covered with a light curable polyester strip which is cured in place. Polyisocyanate precursor is injected into the mould space formed and allowed to cure.

A prior art method of filling the coating gaps in polyolefin coated pipes involves extruding melted foam or solid polyolefin into a mould bridging the cutback coating gap. A number of problems result from this approach.

First the polyolefin used is very non-polar and does not bond well to the polar surface of the pipe. A complex system of primers and adhesives must be applied to the pipe to achieve good adhesion. This is very difficult to do on a pipe laying ship.

Secondly, for the application of primers, adhesives and infill the pipe needs to be heated to at least about 180°C prior to coating. This is fire hazard and also exposes operatives to the risk of serious burns.

Thirdly to achieve good bonding between the infill and the polyolefin abutting the cutback the polyolefin faces of the cutback must be molten and infill must take place before solidification. Synchronisation of the steps is difficult.

Fourthly the apparatus is expensive and bulky.

The invention seeks to reduce at least some of these difficulties.

According to the invention there is provided a method of filling a cut-back of a metal pipe having a polyolefin coating the cut-back comprising a gap in the pipe coating between coated portions the method comprising the steps of:
i. creating a high surface energy layer on the polyolefin portion of the cut-back by flame plasma treatment with an oxidizing flame;
ii. surrounding the cut-back by a mould to define a cavity;
iii. introducing a curable polyurethane into the cavity; and
iv. curing the polyurethane.

Embodiments of the invention will now be illustrated by reference to the accompanying figures of which:
Fig. 1 is a partial scrap view of a cut back;
Fig. 2 is a partial scrap view of a further cut back;
Fig. 3 is a partial scrap view of a cut back with a mould;
Fig. 4 is a partial scrap view of a preferred cut back;
Fig. 5 is a cross-section view of the cut back of Fig. 4; and
Fig. 6 is a partial scrap view of a further preferred embodiment.

The flow line comprises, typically, a steel pipe 1 formed in lengths. An insulant coating 2 for example of polypropylene surrounds the pipe 1. To obtain good bonding of the insulant it may well be necessary to first coat the pipe with an epoxy resin layer and then with an epoxy modified polyolefin adhesive. The skilled worker in the art will have little difficulty in preparing a coated pipe for example by the routine method of extrusion.

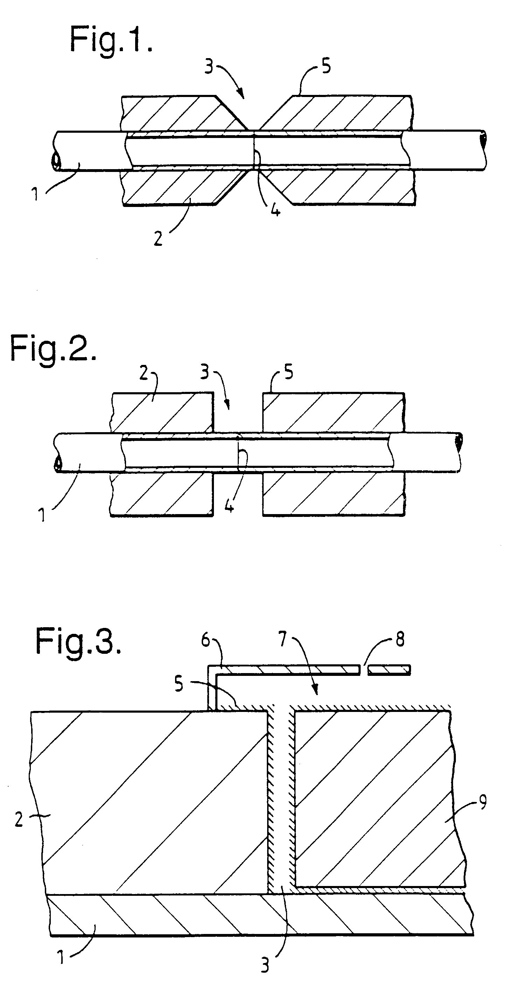

The product of the coating process is a pipe coated with insulant except at the ends. If necessary or desirable insulant can be removed from the pipe ends after coating to give the required pipe. The pipe ends can be chamfered as shown for example in Fig. 1 or they can be square as shown in Fig. 2.

The lengths of pipe are joined for example by welding in known manner to produce a string with a cut back 3 and a weld 4.

The metal pipe can then be subjected to a cleaning step. Preferably this cleaning is a particle blasting or mechanical cleaning to a standard of SA2 to SA3 (BS7079).

The cut back coating chamfer surfaces can then be abraded as can the outer surface 5 of the insulant adjacent the cut back for a distance typically up to 200 mm.

The surface of the cut back coating chamfer or the outer surface of the insulant adjacent the field joint or both is then activated. This is indicated by shading in Fig. 3. The activation step generates high energy species, typically to an energy level of at least 40 dyne/cm on the insulant surface. These species may be ions, electrons, radicals or high energy uncharged species. Activation is by flame plasma treating in an oxidizing flame.

Flame plasma treatment typically involves contacting the surface with an alkane (such as methane, propane or butane) and air or oxygen flame. The flame includes a plasma with a typical energy of around 0.5 eV. Although this is lower than the 5eV typically achieved by corona discharge it is high enough to generate many excited species; free radicals, ions, excited atoms, excited molecules and electrons. A typical alkane/air flame will contain 0, OH. NH, NO and CN. These high energy species are thought (but we do not wish to be bound by this theory) to attack the insulant surface, by free radical oxidation and/or direct addition. In any event after treatment the insulant surface has an affinity for polar materials. It should be noted that although in flame plasma treatment a flame is played on the insulant surface it generally does not melt the surface and melting may be deleterious. The precise length of time the flame should play on the surface can be determined by routine experimentation by the skilled. The flame is of the oxidizing type as exemplified by the Bunsen flame. Care should be taken to avoid contacting the primary reducing zone of the flame with the insulant. Within the secondary, oxidizing zone the energy level achieved varies. As one moves away from the primary zone the energy level achieved typically rises steeply to a maximum and then falls off more slowly.

The ratio of fuel to oxidant also has a significant effect on the energy level achieved. For example when activating a polyolefin a fuel rich flame provides a low level. As the mixture is made leaner the energy level achieved rises at first slowly and then more rapidly. If the oxidant content is greater than stoichiometric the energy level achieved at first tends to rise with increasing oxidant, a maximum is achieved and then falls off rather steeply until combustion cannot be maintained.

The activated surface can then be surrounded by a mould 6 defining a cavity 7.

Those skilled in the art will have no difficulty in devising a suitable mould 6. A curable composition is introduced into the cavity 7 for example via runner 8. The curable composition cures into a polyurethane. Curable PU compositions are polar and hence tend to bond well with preprimed metals but extremely poorly, if at all with polyolefins. The activation step however renders the polyolefin's surface polar and in practice extremely good bonding can be achieved.

After curing of the resin the mould may be removed. In other embodiments of the invention the mould may form a part of the joint and thus be left in situ.

If desired a part of the cavity may be filled with filler blocks 9. If the filler blocks are of non-polar material, for example a material similar to the insulant 2 it is desirable to activate the surface in the manner hereinbefore described. Where the blocks are of polar material for example of polyurethane solid or foam activation may not be required.

In general terms the gap in the insulation will be wide. For example a pipe 170 to 300mm outside diameter with a coating 30 to 60mm thick may have a gap about 300mm long.

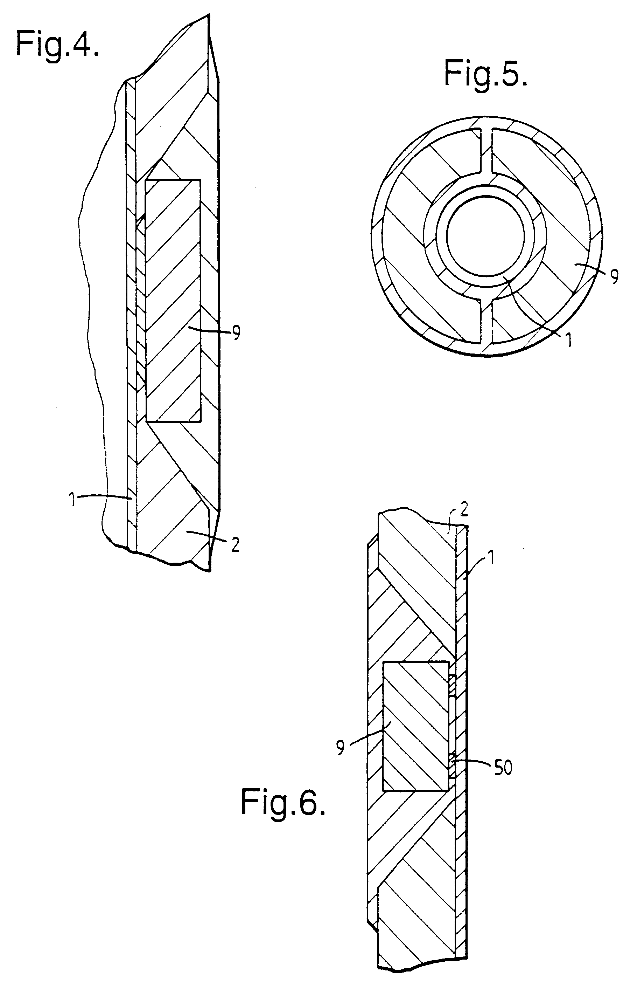

It is by no means essential for the chamfer to all be at the same angle. It may for example be stepped as shown in Fig. 5.

In the embodiment of Fig. 6 the filler block does not rest on a step. In the embodiment of Fig. 6 the chamfer is of constant angle. The filler block 9 rests on feet 50. The feet may comprise neoprene. The feet may be secured to at least one of the pipe or the block 9 by adhesive. For a pipe of the dimensions previously discussed suitable sizes of feet 50 may be 15mm x 15 mm x 5 to 7.5 mm thick. This embodiment is slightly quicker to prepare than that of Figure 5. Additionally the length of the field joint can be slightly shorter and hence will be slightly cheaper.

### Example

A steel pipe about 300mm was coated with a foamed polypropylene system comprising a fusion bonded epoxy base coat (FBE), foamed PP and a solid PP jacket.

Any surface contamination was removed from the bare steel, factory coating chamfers and the adjoining 100mm of coating.

The bare steel was heated to 80-90° using an induction coil and then blasted in an enclosed blast system in accordance with BS7079 to a cleanliness of SA2.5 and a typical surface profile of 50 to 100µm.

The chamfers and the first 100mm of outer coating were abraded using disks to produce a clean surface with a degree of mechanical key. The abraded areas were then activated using thermal ionisation and dedusted using compressed air and lint free wipes. PU primer was then brushed onto the steel and the solvent allowed to evaporate. If necessary the joint area was protected from contamination with sheeting.

Elsewhere premanufactured PP foam shells were removed from protective wrapping and thermal ionisation activated.

The activated shells were applied to portions of the PP coating parallel to the pipe. The gaps between the shells was vertical and there was a gap of about 10mm between the two shells and between the shells and the pipe.

A sheet steel mould coated with silicone release agent was then wrapped around the joint and any gaps sealed with sealing strips.

Fast reacting dual component PU is injected into the mould via an infill port on the underside. The PU filled the gaps to provide continuous corrosion protection. Injection continued until the vent channel was about half full. The moulding was allowed to cure for about five minutes and was then dmoulded, trimmed and finished to give a joint as shown in Figs. 4 and 5.

In other embodiments of the invention a layer of FBE was applied and cured in place of the PU primer coat.

In some embodiments of the invention the PP surface is activated and a thin coat of the PU infill applied by brush. This coat is so thin that no self heating occurs and the PU coating remains uncured until after injection of the PU infill.

The process is safer than the prior art process since the PU precursor infill is cool typically at ambient temperature or slightly above i.e. typically at a termperature not exceeding about 35°C. During curing the infill temperature may rise but will still be lower than the melting point of the polyolefin coating. The joint temperature generally does not exceed about 100°C preferably about 80°C during the process.

## Claims

1. A method of filling a cut-back (3) of a metal pipe (1) having a polyolefin coating (2) the cut-back (3) comprising a gap in the pipe coating between coated portions (2) the method comprising the steps of:
i. creating a high surface energy layer on the polyolefin portion of the cut-back (3) by flame plasma treatment with an oxidizing flame;
ii. surrounding the cut-back by a mould (6) to define a cavity (7);
iii. introducing a curable polyurethane into the cavity (7); and
iv. curing the polyurethane.

2. A method as claimed in claim 1 wherein the surface energy layer has an energy of 40 dyne/cm² or more.

3. A method as claimed in claim 1 or claim 2 wherein the metal is subjected to particle blasting prior to creation of the high surface energy layer.

4. A method as claimed in any one of the preceding claims wherein the polyolefin portion of the cut-back (3) is abraded prior to creation of the high surface energy layer.

5. A method as claimed in any one of the preceding claims wherein the cavity is partially filled with a block (9) of polyolefin or polyurethane prior to step iii.

6. A method as claimed in claim 5 wherein a high surface energy layer is created on the block (9).

7. A method as claimed in any one of the preceding claims wherein the mould (6) is removed after curing of the polyurethane.

8. A method as claimed in any one of the preceding claims wherein the polyolefin coating (2) comprises polypropylene or polyethylene.

9. A method as claimed in any one of the preceding claims wherein step iii comprises the steps of:
iiia applying a thin coat of curable polyurethane to the activated surface; and
iiib filling the remaining cavity with curable polyurethane.

## Patentansprüche

1. Verfahren zum Füllen eines freiliegenden Abschnittes (3) eines Metallrohres (1), das eine Polyolefinbeschichtung (2) trägt, wobei der freiliegende Abschnitt (3) eine Lücke in der Rohrbeschichtung zwischen beschichteten Abschnitten (2) bildet, wobei zu dem Verfahren die Schritte gehören:
i dass durch eine Behandlung mittels Plasmaflamme mit einer oxdidierenden Flamme auf dem Polyolefinabschnitt neben dem freiliegenden Abschnitt (3) eine Schicht mit hoher Oberflächenenergie erzeugt wird;
ii dass der freiliegende Abschnitt von einer Form (6) umgeben wird, um einen Hohlraum (7) zu bilden;
iii dass in den Hohlraum (7) ein aushärtbares Polyurethan eingegeben wird; und
iv dass das Polyurethan ausgehärtet wird.

2. Verfahren nach Anspruch 1, bei dem die Oberflächenenergie der Schicht eine Energie von 40 dyne/cm² oder mehr aufweist.

3. Verfahren nach Anspruch 1 oder 2, bei dem das Metall Partikel gestrahlt wird, bevor die Schicht mit der hohen Oberflächenenergie erzeugt wird.

4. Verfahren nach einem der vorhergehenden Ansprüche, bei dem der Polyolefinabschnitt neben dem freiliegenden Abschnitt (3) vor der Erzeugung der Schicht mit der hohen Oberflächenenergie angeschliffen abgetragen wird.

5. Verfahren nach einem der vorhergehenden Ansprüche, bei dem der Hohlraum vor dem Schritt iii teilweise mit einem Block (9) aus Polyolefin oder Polyurethan gefüllt wird.

6. Verfahren nach Anspruch 5, bei dem auf dem Block (9) eine Schicht mit hoher Oberflächenenergie erzeugt wird.

7. Verfahren nach einem der vorhergehenden Ansprüche, bei dem die Form (6) nach dem Aushärten des Polyurethans entfernt wird.

8. Verfahren nach einem der vorhergehenden Ansprüche, bei dem die Polyolefinbeschichtung (2) Polypropylen oder Polyethylen enthält.

9. Verfahren nach einem der vorhergehenden Ansprüche, bei dem der Schritt iii. die Schritte enthält, wonach:
iiia auf der aktivierten Oberfläche eine dünne Beschichtung aus aushärtbarem Polyurethan aufgegeben wird; und
iiib der verbleibende Hohlraum mit aushärtbarem Polyurethan ausgefüllt wird.

## Revendications

1. Procédé de remplissage d'une zone dégagée (3) d'un tuyau métallique (1) ayant un revêtement en polyoléfine (2), la zone dégagée (3) comprenant une lacune dans le revêtement de tuyau entre des parties revêtues (2), le procédé comprenant les étapes consistant à :
i. créer une couche à énergie superficielle élevée sur la partie en polyoléfine de la zone dégagée (3) par traitement au plasma à la flamme avec une flamme oxydante ;
ii. entourer la zone dégagée par un moule (6) pour définir une cavité (7) ;
iii. introduire un polyuréthanne durcissable dans la cavité (7) ; et
iv. durcir le polyuréthanne.

2. Procédé selon la revendication 1, dans lequel la couche à énergie superficielle a une énergie de 40 dynes/cm² ou plus (40 10⁻⁵N/cm²).

3. Procédé selon la revendication 1 ou 2, dans lequel le métal est soumis à une abrasion par projection de particules avant la création de la couche à énergie superficielle élevée.

4. Procédé selon l'une quelconque des revendications précédentes, dans lequel la partie en polyoléfine de la zone dégagée (3) est abrasée avant la création de la couche à énergie superficielle élevée.

5. Procédé selon l'une quelconque des revendications précédentes, dans lequel la cavité est partiellement remplie avec un bloc (9) de polyoléfine ou de polyuréthanne avant l'étape iii.

6. Procédé selon la revendication 5, dans lequel une couche à énergie superficielle élevée est créée sur le bloc (9).

7. Procédé selon l'une quelconque des revendications précédentes, dans lequel le moule (6) est retiré après durcissement du polyuréthanne.

8. Procédé selon l'une quelconque des revendications précédentes, dans lequel le revêtement en polyoléfine (2) comprend du polypropylène ou du polyéthylène.

9. Procédé selon l'une quelconque des revendications précédentes, dans lequel l'étape iii comprend les étapes consistant à :
iiia appliquer un revêtement mince de polyuréthanne durcissable sur la surface activée ; et
iiib remplir la cavité restante avec du polyuréthanne durcissable.
